Europäisches Patentamt

European Patent Office

Office européen des brevets

(11) Veröffentlichungsnummer: **0 196 723 B1**

(12) **EUROPÄISCHE PATENTSCHRIFT**

(45) Veröffentlichungstag der Patentschrift: **14.08.91**

(21) Anmeldenummer: **86200506.3**

(22) Anmeldetag: **26.03.86**

�followsInt. Cl.5: **H04J 13/00**

(54) Verfahren und Schaltungsanordnung zur Synchronisierung der Empfangseinrichtungen in einem digitalen Multiplex-Übertragunssystem.

(30) Priorität: **29.03.85 DE 3511430**

(43) Veröffentlichungstag der Anmeldung:
**08.10.86 Patentblatt 86/41**

(45) Bekanntmachung des Hinweises auf die
Patenterteilung:
**14.08.91 Patentblatt 91/33**

(84) Benannte Vertragsstaaten:
**AT BE CH DE FR GB IT LI NL SE**

(56) Entgegenhaltungen:
**WO-A-83/03936**
**DE-A- 2 537 683**
**DE-A- 3 015 770**
**DE-B- 2 932 735**
**US-A- 3 971 888**

**NACHRICHTENTECHNIK ELEKTRONIK, TELE-
MATIC 38 (1984), Heft 7, M. Böhm. "Mit Digitaltechnik zum Mobiltelefon für alle", Seiten
264-268**

(73) Patentinhaber: **Philips Patentverwaltung
GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)BE CH FR GB IT LI
NL SE AT**

(72) Erfinder: **Eizenhöfer, Alfons, Dr.-Ing.**
**Feuerweg 7a**
**W-8503 Altdorf(DE)**
Erfinder: **Grauel, Christoph, Dr.-Ing.**
**Drosselweg 1**
**W-8501 Feucht(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Synchronisierung der Empfangseinrichtungen in einem digitalen Multiplex-Übertragungssystem gemäß dem Oberbegriff des Patentanspruchs 1.

Zur Nachrichtenübertragung über ein von einer Vielzahl von Teilnehmern gemeinsam benutztes Übertragungsmedium (z.B. Leitung, Funkstrecke) sind drei Grundverfahren bekannt, nämlich das Codemultiplex-Verfahren, das Frequenzmultiplex-Verfahren und das Zeitmultiplex-Verfahren.

Beim Codemultiplex-Verfahren werden beispielsweise die verschiedenen, über ein gemeinsames Übertragungsmedium geführten Nachrichten durch Basis-Modulation einem Träger aufmoduliert und das sich ergebende, im Vergleich zur Kanalbandbreite schmalbandige Signal wird durch Multiplex-Modulation mit Hilfe eines den Empfänger kennzeichnenden Codeworts auf die Kanalbandbreite spektral gespreizt. Der so entstehende Codemultiplex-Kanal (Nachrichtenübertragungskanal) ist weder in der Zeit, noch innerhalb der Bandbreite beschränkt, dafür aber bezüglich der Leistungsdichte. Die Erkennung des Signals erfolgt nicht durch zeitliche oder frequenzmäßige Selektion, sondern anhand der spektralen Codierung. Die im Codemultiplex-Kanal über lagerte Vielzahl von spektralcodierten Nachrichten werden im Empfänger anhand des diesem zugeordneten Codeworts selektiert. Für die zweistufige Modulation (Basis- und Multiplex-Modulation) werden in Funkübertragungssystemen häufig Phasenumtastung (PSK) oder Frequenzuntastung (FSK) verwendet.

Der ersten Stufe wird z.B. das digitalisierte Sprechsignal (nach A/D-Wandlung) zugeführt in welcher beispielsweise ein multiplikativer Mischer angeordnet ist. Im multiplikativen Mischer wird das zugeführte digitalisierte Sprachsignal mit einem diesem Sender zugeordneten Codewort verknüpft, wodurch eine spektrale Spreizung erfolgt. In der zweiten Modulationsstufe des Senders wird das breitbandige Signal (modulierte, binäre Zeichenfolge) in eine für die Übertragung geeignete Frequenzlage umgesetzt.

Die empfangsseitige Rückgewinnung der Nachricht erfolgt bei dem vorstehend beschriebenen Codemultiplex-Verfahren durch die Aufeinanderfolge von Basis-Demodulations und Multiplex-Demodulation. In der Basis Demodulationsstufe erfolgt durch Multiplikation des Signals mit dem Referenzträger die Umsetzung in eine für die Multiplex-Demodulation geeignete Frequenzlage (z:s. Basisbandlage). Mit Hilfe eines im Empfänger angeordneten Codewort-Generators sowie einer Code-Synchronisationsschaltung wird die spektrale Spreizung rückgängig gemacht, nachdem das Codewort phasenrichtig auf das Empfangcodewort synchronisiert ist. Dadurch wird die vorher über das gesamte Übertragungsband spektral verteilte Signalenergie in das ursprüngliche schmale Frequenzband komprimiert, während die mit einer anderen Multiplex-Modulation in den Empfänger einlaufenden Nachbarzeichen spektral gespreizt bleiben und sich durch ein Bandpaßfilter mit einer Bandbreite entsprechend der des ungespreizten Signals unterdrücken lassen.

Die bei der Multiplex-Demodulation verbleibende systembedingte Reststörung durch die übrigen Signale ist umso geringer, je kleiner die Werte der Kreuzkorrelationsfunktionen zwischen den verwendeten Codeworten und je größer der Spreizfaktor ist. Ein von Null verschiedener Wert der Kreuzkorrelationsfunktion vermindert den Störabstand. Der Störabstand und die Synchronisationszeit werden durch die Kreuzkorrelations- und Autokorrelationsfunktion bestimmt.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Beim Zeitmultiplex-Verfahren steht jedem Teilnehmer die gesamte Bandbreite eines einzigen Funkkanals zur Verfügung, welchen der Teilnehmer nur für kurze Zeitabschnitte benutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Aus der DE-OS 25 37 683 ist ein Funkübertragungssystem mit ortsfesten Funkstationen und beweglichen Funkstationen bekannt, bei welchen verschiedene Kanalzugriffsverfahren mit asynchronem Zeitmultiplex, mit Codemultiplex und mit Frequenzmultiplex verwendet werden.

Für die Codewort-Synchronisation wird eine inkohärente Trägerdemodulation verwendet. Ein Codegenerator erzeugt nacheinander je einen der neun verschiedenen Codes, die die ortsfesten Landfunkstellen kennzeichnen. Nachdem dieser Code mit dem Empfangssignal synchronisiert ist wird das ZF-Signal multipliziert wodurch das breite Spektrum in die Nachrichtenbandbreite transformiert wird. Anschließend kann die empfangene Nachricht beispielsweise mit einem DPSK-Demodulator zurückgewonnen werden. Für die Synchronisation wird ein eigenes Codemuster mit einer Länge von beispielsweise 15 Bit verwendet, welches der Nachricht vorangestellt ist.

Auch Kombinationen der vorgenannten Verfahren und deren Anwendung in einem digitalen Funk-übertragungssystem sind bekannt. Beispielsweise ist in "Nachrichtentechnik, Elektronik + Telematic 38 (1984), Heft 7, Seiten 264 bis 268" ein digitales Funkübertragungssystem beschrieben, bei dem das Zeitmultiplex-Verfahren in Kombination mit Codespreizung verwendet wird. In den Zeitkanälen zur Sprach- und/oder Datenübertragung (Kommunikationskanal TCH) werden nacheinander eine Bit-Folge zur Ermittlung des Bit-Takts (Synchron), ein Rahmen-Synchronisationswort (Vorspann) und die Bit-Folge der Nachricht selbst übertragen. Die Zeitkanäle zur Nachrichtenübertragung (3x20 TCH) sind mit Organisationskanälen (3 CCH) zu einem Zeitmultiplexrahmen mit der Zeitdauer 31,5 msec. angeordnet. Soll als Nachricht das Sprachsignal übertragen werden, so kann zur Analog-/Digitalwandlung die adaptive Deltamodulation verwendet werden. Die dabei entstehenden Nachrichtenzeichen (Bit) werden im Sender mit einem Code überlagert. Es hat sich als vorteilhaft erwiesen, die einzelnen Nachrichtenzeichen in Blöcke zu je vier Bit zusammen zu fassen und die so entstehenden Blöcke mit einem orthogonalen Alphabet zu spreizen. Der dabei verwendete Spreizfaktor ist ein Kompromiß, um die Vorteile der Bandspreizung mit der Forderung nach Frequenzökonomie miteinander zu vereinigen.

Weiterhin ist ein Nachrichtenübertragungsverfahren vorgeschlagen worden (DE-A-3447107, veröffentlicht 26.6.86), bei dem in Hin- und Rückrichtung des Nachrichtenübertragungskanals jeweils ein anderes Modulationsverfahren angewandt wird. Zur Nachrichtenübertragung greifen die beweglichen Funkstationen auf einen aus einer Vielzahl von Nachrichtenkanälen zu. In der Richtung von der ortsfesten Funkstation zu den dieser zugeordneten beweglichen Funkstationen ist jeder Nachrichtenkanal durch Spreizmodulation gespreizt. Die gespreizten Nachrichtenkanäle werden einander überlagert und das dadurch erhaltene breitbandige Summensignal wird in einem gemeinsamen Frequenzband übertragen. In der Richtung von den beweglichen Funkstationen zu der ortsfesten Funkstation erfolgt die Nachrichtenübertragung in voneinander getrennten, schmalbandigen Frequenzkanälen.

Für die Sprachübertragung, in der Richtung von der ortsfesten Funkstation zu den beweglichen Funkstationen, wird die in der beweglichen Funkstation verwendete Spreizmodulation von der ortsfesten Funkstation ausgewählt und beim Verbindungsaufbau der beweglichen Funkstation mitgeteilt wird. Für die Übertragung von Signalisierungen an die der ortsfesten Funkstation (zugeordneten beweglichen Funkstationen wird in der Richtung von der ortsfesten Funkstation) zu den beweglichen Funkstationen, eine allen beweglichen Funkstationen gemeinsame Spreizmodulation verwendet.

Zur Unterscheidung von in benachbarten Funkzellen angeordneten ortsfesten Funkstationen senden diese, in Richtung von der ortsfesten Funkstation zu den beweglichen Funkstationen, in unterschiedlichen Frequenzbändern. In den ortsfesten Funkstationen sind Schmalband-Empfänger angeordnet, welche während des Betriebs auf mehrere Frequenzkanäle umschaltbar sind. Die Zahl der in der beweglichen Funkstation schaltbaren Sendefrequenzen ist geringer als die Zahl der in der ortsfesten Funkstation schaltbaren Empfangsfrequenzen. Beispielsweise kann in der ortsfesten Funkstation eine Umschaltung auf 1.000 Frequenzen und in der beweglichen Funkstation eine Umschaltung auf 40 Frequenzen vorgenommen werden.

Aufgrund der Interferenzsituation werden in jeder ortsfesten Funkstation die dort verwendeten Empfangsfrequenzen verwaltet. Bei Empfangsstörungen wird die betroffene Verbindung, in Richtung von der beweglichen Funkstation zu der ortsfesten Funkstation, auf einen anderen nicht gestörten Frequenzkanal, auf welchen sowohl die ortsfeste Funkstation als auch die bewegliche Funkstation umschalten kann, umgeschaltet. Die Empfangseinrichtung in der ortsfesten Funkstation zum Drahtnetz des öffentlichen Fernspechsystems hin bleibt weiterhin an der Verbindung beteiligt.

Die Synchronisation der Empfangseinrichtungen ist bei der blockweisen Übertragung von Nachrichten besonders wichtig, da bei falscher Synchronisation der gesamte Block und die in ihm enthaltene Nachricht verfälscht wird. Insbesondere in einem Funkübertragungssystem, bei dem die Verbindung über hindernisbehaftete, vielfach reflektierende Ausbreitungsstrecken stattfindet, treten häufig Verfälschungen im empfangenen Signal auf und führen zu Verbindungsstörungen Die Verbindungsstörungen, deren Dauer und Häufigkeit geschwindigkeitsabhängig sind und einer Rayleigh - Verteilung entsprechen, beruhen auf einer von der Fahrstrecke abhängigen Feldstärke-Verteilung, welche in Abhängigkeit von den Reflexionskoeffizienten der Umgebung zu Fehlerraten von weit über 1 %, kurzzeitig nahezu 50 % führen.

Der Erfindung liegt die Aufgabe zugrunde ein Nachrichtenübertragungsverfahren anzugeben, bei dem die Synchronisation der Empfangseinrichtungen störsicher erfolgen kann.

Diese Aufgabe wird durch die im Patentanspruch 1 angegebenen Merkmale gelöst.

Beim erfindungsgemäßen Verfahren werden in Codeebenen (Codemultiplex-Übertragungssystem) oder Frequenzebenen (Frequenzmultiplex-Übertragungssystem) dieselben Synchronisiersymbole eingeblendet. Dadurch kann erreicht werden, daß die von der zentral angeordneten Sendestation (ortsfeste Funkstation) gesendeten Synchronisiersymbole sich nicht gegenseitig stören. Die in allen Nachrichtenübertragungskanälen gleichzeitig gesendeten Synchronisiersymbole werden im Vergleich zur Nutzinformation in allen Empfangseinrichtungen mit wesentlich höherer Energie empfangen. Bei der Anwendung des erfindungsgemäßen Verfahrens in einem digitalen Funkübertragungssystem können benachbarte ortsfeste Funkstationen durch unterschiedliche Frequenzen oder unterschiedliche Codewörter getrennt werden. Die Synchronisiersymbole können nahezu störungsfrei empfangen werden und in der Empfangseinrichtung zur sicheren Vermessung des Mehrwegeprofils herangezogen werden. Durch die Einblendung der Synchronisiersymbole in den kontinuierlichen Datenstrom der Nutzinformation, beispielsweise im Abstand von einer ms, ist auch bei hohen Fahrzeuggeschwindigkeiten eine Ausnützung des Mehrwegeempfangs möglich. Das erfindungsgemäße Verfahren ist dabei auch bei unterschiedlichen Übertragungsverfahren (z.B. 2-PSK) oder unterschiedlichen Multiplex-Verfahren (z.B. CDM Code Division Multiplex) anwendbar.

Das Verfahren gemäß Patentanspruch 2 weist den Vorteil auf, daß durch die phasenstarre (nicht notwendigerweise phasengleiche) Addition der Synchronisiersymbole ein (unkontrolliertes) gegenseitiges Auslöschen der ansich identischen Synchronisiersymbolen in den einzelnen Nachrichtenübertragungskanälen vermieden wird.

Für die Spreizung der Synchronisiersymbole und der Datensymbole ist es möglich in den Codeebenen dieselben Spreizcodes zu verwenden. Werden gemäß Patentanspruch 3 unterschiedliche Codesätze verwendet, so kann eine Fehlsynchronisation in der Empfangseinrichtung sicher ausgeschlossen werden. Gleiches gilt bei der Verwendung eines Codemultiplex-Verfahrens für die Datensymbole und unterschiedlicher Frequenzen für die Synchronisiersymbole.

Werden gemäß Patentanspruch 4 die Daten- und Synchronisiersymbole der verschiedenen Nachrichtenübertragungskanäle im Codemultiplex übertragen, so kann die Störsicherheit der Synchronisierung noch weiter verbessert werden, da die beim Codemultiplex-Verfahren typischen gegenseitigen Interferenzen verschiedener Nachrichtenübertragungskanäle bei den Synchronisiersymbolen nicht vorhanden sind.

Wird gemäß Patentanspruch 5 die Empfangseinrichtung anhand des vermessenen Mehrwege-Profils an die Kanaleigenschaften angepaßt, so läßt sich die Übertragungssicherheit weiter erhöhen. Die Anpassung kann durch Nachführung der Abtastzeitpunkte oder durch adaptive Entzerrung erfolgen.

Das Verfahren gemäß Patentanspruch 6 weist den Vorteil auf, daß die Synchronisierung in der Empfangseinrichtung, insbesondere der hierfür erforderliche Schaltungsaufwand, auf einfache Art und Weise reduziert werden kann.

Ist gemäß Patentanspruch 7 die Blocklänge ein Vielfaches des Abstand der Synchronisiersymbole, so kann das Synchronisier-Verfahren in der Empfangseinrichtung vereinfacht werden. Dabei ist ein Kompromiß zwischen Empfängeraufwand und Schaltungsaufwand in der Steuereinrichtung für die Durchführung der Synchronisation anzustreben. Beim Verfahren gemäß Patentanspruch 8 ist zwar ein geringerer Empfängeraufwand andererseits aber ein aufwendiges Synchronisier-Verfahren erforderlich.

Für die im Patentanspruch 9 angegebene Ausführungsform einer Schaltungsanordnung zur Durchführung des Verfahrens nach Patentanspruch 1 ist ein geringer zusätzlicher Schaltungsaufwand erforderlich, da eine Anzahl von ohnehin in der ortsfesten Funkstation und beweglichen Funkstation vorhandener Einrichtung mitverwendet werden können.

Das erfindungsgemäße Verfahren wird im folgenden anhand in der Zeichnung dargestellter Ausführungsformen näher beschrieben und erläutert. Es zeigt:

Fig. 1     für den Anwendungsfall Codemultiplex-Übertragungssystem eine erste Ausführungsform des erfindungsgemäßen Synchronisier-Verfahrens,

Fig. 2     die bei Anwendungsfall gemäß Fig. 1 verwendeten Codesätze,

Fig. 3     für den Anwendungsfall kombiniertes Codemultiplex/Frequenzmultiplex-Übertragungssystem eine zweite Ausführungsform des erfindungsgemäßen Synchronisier-Verfahrens,

Fig. 4     für den Anwendungfall Codemultiplex/Zeitmultiplex-Übertragungssystem eine dritte Ausführungsform des erfindungsgemäßen Synchronisier-Verfahrens,

Fig. 5     die beim Anwendungsfall gemäß Fig. 4 verwendeten unterschiedlichen Codesätze,

Fig. 6     das Blockschaltbild einer Ausführungsform für das Sendeteil der ortsfesten Funkstation und

Fig. 7     das Blockschaltbild einer, Ausführungsform für das Empfangsteil der beweglichen Funkstation zur Durchführung des erfindungsgemäßen Verfahrens.

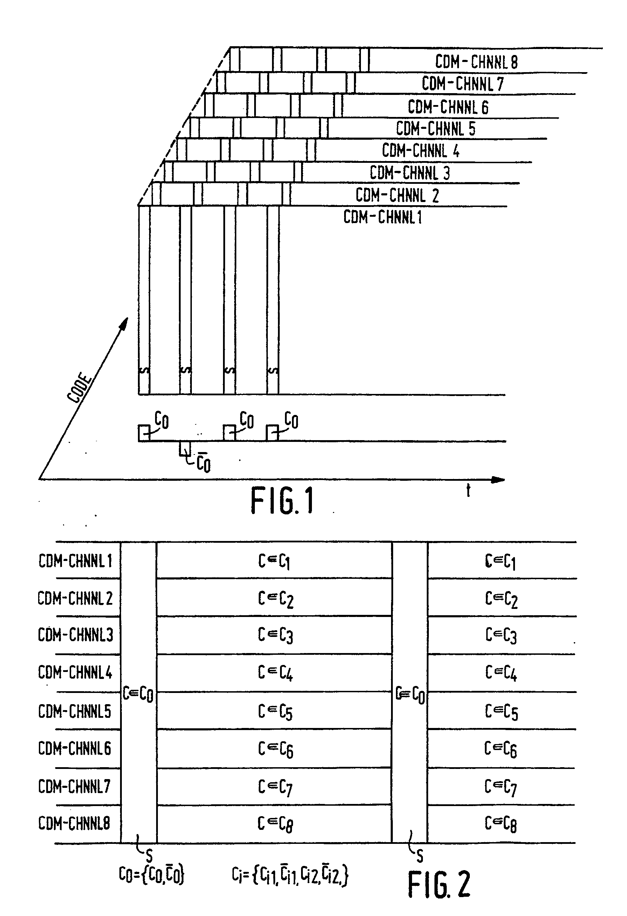

In Fig. 1 ist ein Codemultiplex-Übertragungssystem dargestellt, bei dem die einzelnen Nachrichtenübertragungskanäle durch Verwendung von unterschiedlichen Sätzen von Codesymbolen voneinander getrennt werden. Durch die Vergabe von ausgesuchten Codesymbolen für die Spreizung wie z.B. pseudozufällige, orthogonale oder quasiorthogonale Codewörter ist die gleichzeitige Übertragung von Nachrichten im Codemultiplex möglich. Bei der in Fig. 1 dargestellten Ausführungsform werden acht individuelle Spreizcodes verwendet, welche eine Spreizung von 31, d.h. eine Länge von 31, aufweisen. Eine Spreizung von 31 ist bei Anwendung in einem digitalen Funkübertragungssystem nur dadurch möglich, daß alle Codemultiplex-Kanäle von dem Sender der ortsfesten Funkstation mit gleicher Leistung und zeitsynchron ausgesendet werden. Durch die Verwendung von vier Symbolen in jedem Codemultiplex-Kanal lassen sich zwei Bit des Nutzsignals zu einem Symbol zusammenfassen. Dadurch verringert sich die Symbolrate gegenüber der Bitrate des Basisbandes um die Hälfte.

Beim erfindungsgemäßen Verfahren werden zwischen den Datensymbolen in definierten Abständen Synchronisiersymbole s eingeblendet, welche in allen Nachrichtenübertragungskanälen zeitlich parallel und synchronisiert (von der ortsfesten Funkstation BS) gesendet werden. Für die Synchronisation werden zwei Symbole $c_0$, $\overline{C_0}$ benötigt, welche für alle Codemultiplex-Kanäle gleich sind. Zwei solcher Symbole können durch ein antipodales Spreizcodewort dargestellt werden und die jeweilige Empfangseinrichtung muß drei verschiedene antipodale Codewörter erkennen können.

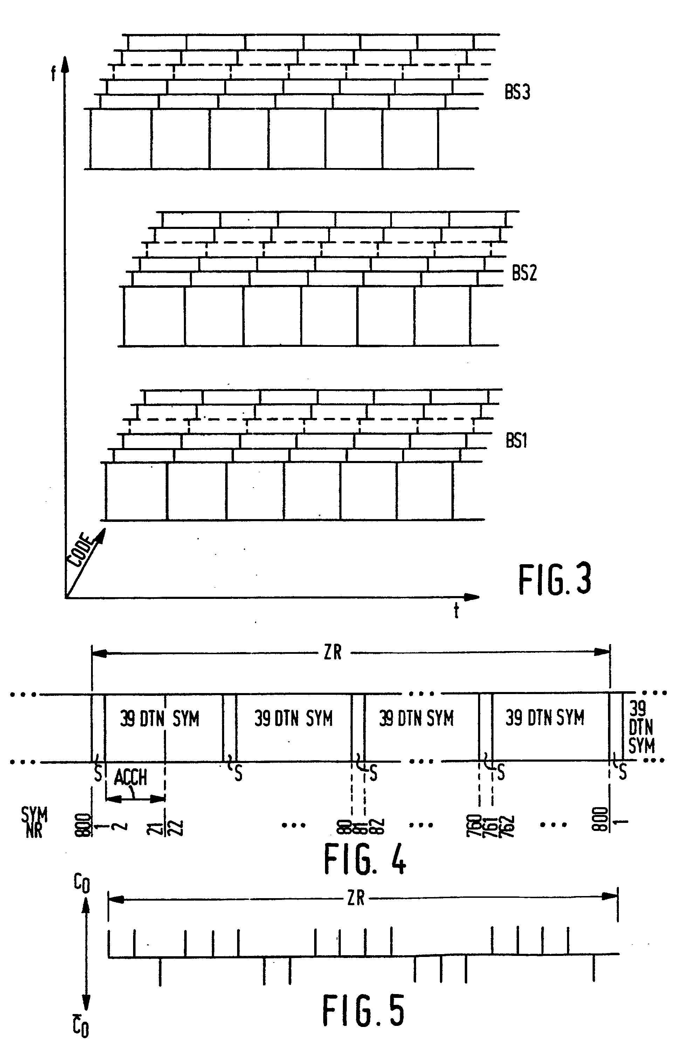

Wie in Fig. 2 dargestellt, kann jedes Codewort invertiert sein. Zur Codierung des Basisbandsignals und der Synchronisiersymbole stehen sechs verschiedene Symbole zur Verfügung, von denen zwei ausschließlich für die Synchronisation verwendet werden. Da die Nachrichtenübertragung gleichzeitig in acht Codemultiplex-Kanälen erfolgt, müssen im Sender 17 verschiedene Codewörter verwendet werden, während in der Empfangseinrichtung für den Zugriff auf den Nachrichtenübertragungskanal nur drei verschiedene Codewörter erforderlich sind.

Werden im digitalen Multiplex-Übertragungssystem drei verschiedene Codesätze verwendet, so muß jede Empfangseinrichtung ihrem Korrelator auf 51 verschiedene Codewörter einstellen können, wofür maximal drei Korrelatoren benötigt werden. Das Synchronisiersymbol s ist unabhängig von der Modultion des Signals und Codierung des Nachrichtenübertragungskanals, wodurch eine Synchronisation in der Empfangseinrichtung möglich ist, ohne die eigentliche Nachricht zu decodieren und demodulieren. Beim erfindungsgemäßen Verfahren ist keine Synchronisation der Sender im Multiplex-Übertragungssystem (wie in Fig. 3 dargestellt, zwischen verschiedenen Träger-Frequenzen benachbarter ortsfester Funkstationen BS1 bis BS3), erforderlich. Lediglich die durch das Codemultiplex-Verfahren getrennten Nachrichtenübertragungskanäle innerhalb eines Trägers sind synchronisiert. Die in den acht parallelen Codemultiplexkanälen gleichzeitig gesendeten Synchronisiersymbole s werden in allen Empfangseinrichtungen mitwesentlich höherer Energie als die Datensymbole empfangen. Werden im Sender die Spannungenphasen richtig addiert, so empfängt jede einzelne Empfangseinrichtung die Synchronisierinformation um 18 dB über dem normalen Pegel. Zusätzlich entfallen die Gleichkanalstörungen durch die im Codemultiplex betriebenen Nachrichtenübertragungskanäle des gleichen Trägers. Dadurch kann eine sichere Synchronisation vorgenommen werden.

Die Empfangseinrichtung synchronisiert sich zunächst auf die Frequenz der nichtkohärent empfangenen Synchronisiersymbole s, wobei die Polarität der Synchronisiersymbole s ($c_0$, $\overline{c_0}$) unberücksichtigt bleibt. Die Synchronisiersymbole s werden, wie in Fig. 1 oder Fig. 3 dargestellt, in definierten Abständen, z.B. alle Millisekunde ausgesendet, so daß der Synchronisiervorgang der Bitsynchronisation relativ schnell abgeschlossen ist.

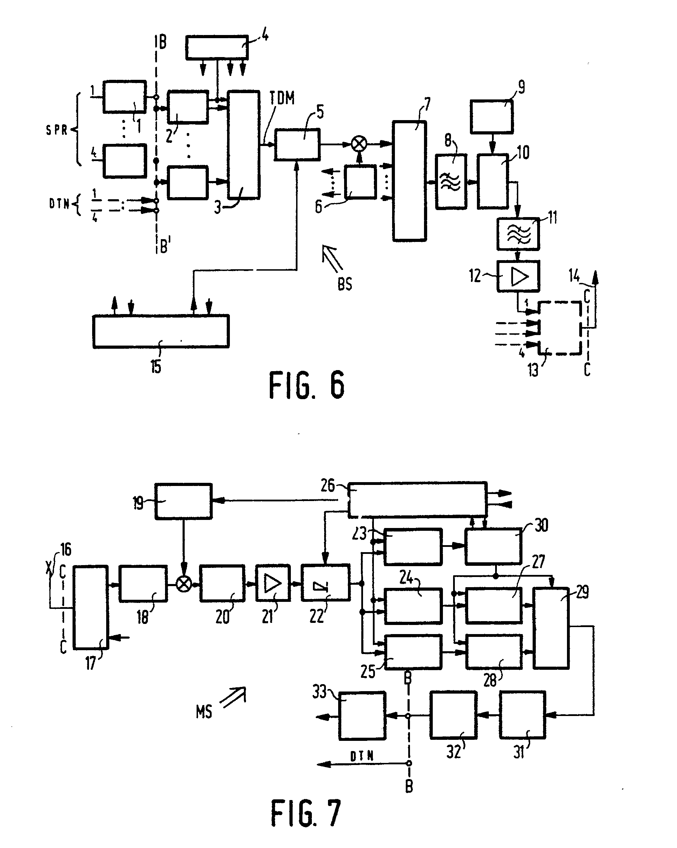

Im zweiten Schritt wird die kohärente Demodulation und damit die vorzeichenrichtige Erkennung der empfangenen Symbole ermöglicht. Jedes Synchronisiersymbol s ergibt am Korrelatorausgang einen positiven oder negativen Impuls, was den logischen Kennzustand "1" bzw. "0" entspricht. Die Synchronisiersymbole s sind so mit positiven bzw. negativen Vorzeichen codiert, daß daraus eine mögliche Vorzeichenumkehr durch um 180° Grad verdrehte Phase erkannt werden kann, so daß das erfindungsgemäße Synchronisierverfahren bei einem kombinierten Codemultiplex/Zeitmultiplex-Überfragungssystem (siehe Fig. 4 und Fig. 5) auch zur Rahmensynchronisation angewandt werden kann.

Bei dem erfindungsgemäßen Verfahren kann das Synchronisiersymbol s gleichzeitig zur Vermessung des Mehrwegeprofils benutzt werden. Damit die Vermessung des Mehrwegeprofils möglichst fehlerfrei ist, wird das Synchronisiersymbol s in genügend kurzen Abständen z.B. alle Millisekunden, gesendet. Aufgrund der im Vergleich zu den Datensymbolen wesentlich höheren Leistung wird das Synchronisiersymbol s in den Empfangseinrichtungen genügend störungsfrei empfangen. Dadurch können Mehrwege hinreichend genau aufgelöst und Fading-Effekte weitgehend vermieden werden.

Das erfindungsgemäße Synchronisierverfahren ist auch bei einem kombinierten Codemultiplex/Frequenzmultiplex-Übertragungssystem anwendbar. Für den Anwendungsfall in einem digitalen Funkübertragungssystem sind die ortsfesten Funkstationen BS1 bis BS3 durch Verwendung unterschiedlicher HF-Träger mit unterschiedlichen Frequenzen f voneinander getrennt. Jede ortsfeste Funkstation BS1 bis BS3 bedient eine Zellgruppe (Cluster) bestehend aus C-Zellen. Wie Untersuchungen ergeben haben ist für die Übertragungsrichtung von der ortsfesten Funkstation zu den Empfangseinrichtungen ein 3-Zellen-Cluster zur Unterdrückung von Gleichkanalfrequenzen ausreichend.

Um die Übertragungskapazität in einem digitalen Funkübertragungssystem weiter erhöhen zu können werden in jeder Codeebene unter Anwendung des Zeitmultiplex-Verfahrens zusätzliche Nachrichtenübertragungskanäle geschaffen. Werden acht individuelle Spreizcodeebenen mit vier zeitlich gestaffelten Kanälen gebildet, so können 32 Einzelkanäle zu je 16 kbit/s übertragen werden, welche nach Codespreizung einen gemeinsamen HF-Träger aufmoduliert werden. Bei Anwendung einer 4-Phasenmodulation ergibt sich für die 32 Einzelkanäle eine Bandbreite von 1,25 MHz. Die Zeitstaffelung und damit die Zahl der Nachrichtenübertragungskanäle pro Spreizcodeebene hängt von der für jeden Nachrichtenübertragungskanal benötigten Bitrate ab. Wegen der Zusammenfassung von je zwei Bit zu einem von vier möglichen Symbolen bleibt einerseits die Symboldauer mit 2S $\mu$s genügend lang um Intersymbolinterferenzen die durch Mehrwegeempfang entstehen, zu vermeiden und andererseits ist der Aufwand in den Empfangseinrichtungen für die Korrelatoren niedrig. Die innerhalb einer ortsfesten Funkstation BS zur Trennung der Codeebenen benutzten 16 Spreizcodes müssen bei identischer Zeitlage paarweise orthogonal sein, während in verschiedenen ortsfesten Funkstationen BS mit gleichem Träger, die unterschiedlichen Synchronisiersymbole s möglichst geringe Kreuzkorrelationsprodukte aufweisen sollen, bei beliebigen zeitlichen Verschiebungen.

Spreizcodes, welche diese Bedingungen erfüllen sind sogenannte Gold-Codes. Eine Änderung des Spreizcodes hat keinen Einfluß auf die Empfangseinrichtungen, da diese programmierbare Korrelatoren aufweisen, welche von Verbindung zu Verbindung auf Anweisung der ortsfesten Funkstation BS neu eingestellt werden. Für die Übertragung solcher Einstellinformationen und zur Trennung der einzelnen Zeitkanäle im Zeitmultiplexrahmen ZR ist ein Organisationskanal ACCH im Zeitmultiplexrahmen ZR vorgesehen.

Wie aus den Fig. 4 und 5 hervorgeht sind die Synchronisiersymbole s im Zeitmultiplexrahmen ZR in definierten Abständen zwischen den Datensymbolen eingeblendet und so mit positiven bzw. negativen Vorzeichen codiert, daß daraus eine mögliche Vorzeichenumkehr durch um 180$^0$ Grad verdreht Phase erkannt und auf den Rahmenanfang geschlossen werden kann. Die Empfangseinrichtung setzt nun lediglich einen Bitzähler neu und damit ist auch die Rahmensynchronisation sichergestellt. Bei einer Rahmenlänge von 20 Millisekunden für en Zeitmultiplexrahmen liegt die, Zeit für den gesamten Synchronisationsvorgang in der Größenordnung von 100 ms. Die Symboldauer des Spreizcodeworts ist mit 25 $\mu$s so groß gewählt, daß Symbolinterferenzen weitgehend vermieden werden bzw. nur mit kleiner Amplitude auftreten.Die Chipdauer ergibt sich bei einer Spreizung von 31 zu 0,806 ns und die Chiprate zu 1,24 Mcps. Damit ist auch die Chipdauer klein genug um eine hinreichende Auflösung der Mehrwege zu erlauben und Fadingeinflüsse weitestgehend zu vermeiden. Jede Codeebene erlaubt eine maximale Bruttobitrate von 76 kbit/s zuzüglich 2 kbit/s für einen jeder Codewortebene zugeordneten Organisationskanal ACCH zuzüglich 2 kbit/s für die Übertragung der Synchronisierinformation.

Fig. 6 zeigt das Blockschaltbild des Sendeteils der ortsfesten Funkstation BS. Der im Basisband übertragene Daten-/Sprachstrom setzt sich folgendermaßen zusammen. Die digitalisierte Sprache jedes einzelnen Kanals wird zunächst in einem Transcoder 1 von PCM auf das für die Funkübertragung erforderliche Übertragungsverfahren mit entsprechend geringerer Bitrate umcodiert. An der Schnittstelle B-B' kann eine Datenquelle angeschlossen werden. In einem mit der Datenquelle bzw. den Transcoder 1 verbundenen Kanalcodierer 2 wird eine spezielle Kanalcodierung zum Schutz signifikanter Bits gegen Übertragungsfehler auf dem Übertragungskanal hinzugefügt. Diese Kanalcodierung kann je nach zu übertragendem Dienst unterschiedlich sein. In einem mit dem Kanalcodierer 2 verbundenen Multiplexer 3 wird in den Datenstrom die verbindungsbegleitende Signalisierung und die von einer Synchronisierschaltung 4 herrührende Synchronisationsinformation hinzugefügt. Das TDM-Signal (Time Division Multiplex-Signal) am Ausgang des TDM-Multiplexers 3 ent hält also bei der in Fig. 4 dargestellten Ausführungsform vier Sprach-/Datenkanäle, einen verbindungsbegleitenden Signalisierungskanal (für ein TDM-Kanalbündel) sowie die für die Synchronisation in den beweglichen Funkstationen MS erforderlichen Synchronisationsbits. Die Synchronisationsbits werden in das TDM-Signal eingeblendet.

Das TDM-Signal am Ausgang des Multiplexers 3 wird mit den jeweiligen von Codegeneratoren 5 erzeugten Codeworten multipliziert, wobei jeweils zwei Bit zu einem Symbol zusammengefaßt und mit dem gewünschten Code gespreizt werden. Der Codegenerator 5 ist mit einer Steuereinrichtung 15 verbunden und fügt auf Befehl der Steuereinrichtung 15 Synchronisiersymbole anstelle von Datensymbolen in den am Ausgang des Multiplexers 3 auftretenden kontinuierlichen Datenstrom ein. Auf das gespreizte Signal wird ein den Eigenschaften des Funkübertragungskanals angepaßtes Modulationsverfahren angewandt, beispielsweise wird mit dem gespreizten Signal dann die Phase eines aus einem Oszillator 6 stammenden Trägersignals umgetastet, wodurch ein mit der Information und dem Codewort verknüpftes, bei einer niedrigen Zwischenfrequenz moduliertes BPSK (Binary Phase Shift Keying) Signal entsteht. Das modulierte CDM-Signal wird einem Summierer 7 zugeführt, dessen Ausgang mit einem Bandpaßfilter 8 verbunden ist. Acht dieser modulierten CDM-Signale bilden nach Addition und Bandpaßfilterung ein in der Amplitude mehrstufiges Gesamtsignal, das schließlich auf die Endfrequenz umgesetzt wird.

Hierzu ist als Mischoszillator ein Synthesizer 9 vorgesehen, welcher innerhalb des Frequenzbereiches des digitalen Funkübertragungssystems mit entsprechenden Stufen geschaltet werden kann. Der Synthesizer 9 ist nur für die wenigen möglichen Frequenzen der FDM-Stufe (Frequenzy Division Multiplex-Stufe) ausgelegt. Die Mischung des CDM-Signals mit der entsprechenden vom Synthesizer 9 gelieferten Frequenz erfolgt in einer Einrichtung 10, welche mit einem Bandpaßfilter 11 verbunden ist. Der Ausgang des Bandpaßfilters 11 ist mit einem Leistungsverstärker 12 verbunden und das herausgefilterte und verstärkte Sendesignal gelangt über einen Senderkoppler 13 zur Antenne 14. Bei kleineren ortsfesten Funkstationen BS mit bis zu 32 Nachrichtenübertragungskanälen entfällt der Senderkoppler 13 völlig.

Die Kanal- und Codegeneratoreinstellung, die richtige Auswahl der Kanalcodierung und die Einfügungen von Meldungen in den Organisationsdatenstrom erfolgt mittels der in der ortsfesten Funkstation BS angeordneten Steuereinrichtung 15. Der ausgewählte Funkübertragungskanal kann dabei ein TDM-Kanal in einer CDM-Ebene sein.

Fig. 7 zeigt das Blockschaltbild des Empfangsteils der beweglichen Funkstation MS. Das von einer gemeinsamen Sende-/Empfangstenne 16 empfangene Signal gelangt über ein Empfangsfilter eines Duplexers 17 zur Eingangsstufe 18 des Empfängers. Die Anforderungen an das Empfangsfilter des Duplexers 17 sind relativ gering, so daß sich auch für bewegliche Funkstationen MS mit geringer Diensteanforderung, z.B. einfaches Datenfunkgerät, eine kostengünstige Lösung ergibt. In der Eingangsstufe 18 wird das Signal verstärkt und dann mit einer aus einem Synthesizer 19 stammenden Synthesizerfrequenz auf eine Zwischenfrequenz gemischt.

Das Zwischenfrequenzsignal wird einem ZF-Teil 20 zugeführt, in dem eine weitere Verstärkung und Filterung des Signals vorgenommen wird. Auch für den Synthesizer 19 kann wie für den Synthesizer 9 der ortsfesten Funkstation BS ein einfacher Synthesizer verwendet werden, welcher sich kostengünstig realisieren läßt. Im ZF-Teil 20 sind Filter angeordnet, welche die Nachbarkanalselektion zur Abgrenzung gegen benachbarte Breitbandkanäle bzw. zur Unterdrückung von Mischprodukten dienen. Die eigentliche Rauschfilterung erfolgt in Korrelatoren 23 bis 25. Mit dem ZF-Teil 20 ist eine Amplituden-Regelschaltung 21 verbunden, welche das Ausgangssignal des ZF-Teils 20 auf einen ausreichenden Pegel zur Ansteuerung der nachfolgenden Schaltungen anhebt und eine mögliche Übersteuerung dieser Schaltungen verhindert. Die Amplituden-Regelschaltung 21 gleicht unterschiedliche Funkfelddämpfungen und Pegelschwankungen aufgrund von Abschattungen aus, so daß in den nachfolgenden Einrichtungen der beweglichen Funkstation MS eine lineare Verarbeitung durchgeführt werden kann. Die Regelzeitkonstante der Amplituden-Regelschaltung 21 wird im wesentlichen von diesen Abschattungen bestimmt. Das in der Leistung geregelte ZF-Signal am Ausgang der

Amplituden-Regelschaltung 21 wird in einem mit dieser verbundenen Demodulator 22 ins Basisband umgesetzt. Dies kann beispielsweise bei Anwendung einer BPSK-Modulation nach dem Prinzip einer Costasschleife durchgeführt, so daß Frequenz und Phase mit berücksichtigt werden. Mehrdeutigkeiten um ganzzahlige Vielfache von 180° können anhand der Polarität der empfangenen Synchronworte erkannt und entsprechend ausgeglichen werden.

Mit dem Demodulator 22 sind drei Korrelatoren 23, 24 und 25 verbunden, welche von einer Steuereinrichtung 26 auf die gerade gültigen Codes 1 und 2 und auf einen in der Funkzone für das gesamte Kanalbündel gültigen Synchroncode eingestellt werden. Mittels der Steuereinrichtung 26 wird der empfangene Organisationsdatenstrom ausgewertet, indem die Daten der von dem Teilnehmer gewünschten Dienste und die Daten für die Geräteart vorgesehenen Funkübertragungskanäle ausgelesen werden, ein im Organisationsdatenstrom als frei ausgewiesener und auch im in der beweglichen Funkstation MS schaltbarer Funkübertragungskanal auswählt wird und anschließend ein Zugriffssignal auf diesem ausgewählten Funkübertragungskanal zur ortsfesten Funkstation BS gesendet wird.

Das Ausgangssignal der Korrelatoren 23 bis 25 wird einerseits zur Ableitung von Symboltakt, Rahmentakt sowie Bittakt verwendet andersseits wird dieses zur Vermessung des augenblicklich gültigen Mehrwegeprofils herangezogen. Da ein einheitlicher Synchroncode mit entsprechend größerem Pegel in dem gesamten Kanalbündel zum gleichen Zeitpunkt abgestrahlt wird ergibt sich eine sichere Synchronisationserkennung und Vermessung des Mehrwegeprofils.

Die Ausgänge der Korrelatoren 24 und 25 sind mit Abtastschaltungen 27, 28 verbunden, welche die Ausgangssignale der Korrelatoren 24 und 25 abtasten und das jeweilig Ergebnis einer Entscheidungsstufe 29 zuführen. Dabei werden die Ergebnisse der synchron zu den Echos der Mehrwegeausbreitung ablaufenden Abtastungen in der Entscheidungsstufe 29 proportional zur Amplitude der Echos (mittels einer Einrichtung 30) gewichtet. Die Entscheidungsstufe 29 hat die Aufgabe, den gesendeten Code und die Polarität des Codes zu schätzen. Der Schätzwert gestattet somit die Auswahl des mit der größten Wahrscheinlichkeit gesendeten Symbols. Nach der Symbol-Bit-Umwandlung in der Entscheidungsstufe 29 wird das Ausganssignal einen mit der Entscheidungsstufe 29 verbundenen TDM-Demultiplexer 31 zugeführt. Der Demultiplexer 31 ist mit einem Kanal-Decodierer 32 verbunden an dessen Ausgang der gesendete Datenstrom wieder zur Verfügung steht. Bei digitaler Sprachübertragung wird in einem Sprachdecoder 33 das digitale Sprachsignal decodiert, einen D/A-Wandler und einem mit diesem verbundenen Lautsprecher zugeführt.

Ist in der beweglichen Funkstation MS beispielsweise die Dienstart Datendienst realisiert, so können die am Ausgang des Kanaldecodieres 32 auftretenden Daten sofort z.B. angezeigt oder ausgedruckt werden.

**Patentansprüche**

1. Verfahren zur Synchronisierung der Empfangseinrichtungen in einem digitalen Multiplex-Übertragungssystem, in dem zur Bandspreizung und zur Trennung der einzelnen Übertragungskanäle unterschiedliche Sätze von untereinander unkorrelierten Datensymbolen verwendet werden und in dem die Datensymbole der einzelnen Nachrichtenübertragungskanäle des Multiplex-Übertragungssystems zeitsynchron zueinander gesendet werden,
dadurch gekennzeichnet,
daß zwischen den Datensymbolen $(d_1...d_m)$ in definierten Abständen synchronisiersymbole $(s_1..s_n)$ eingeblendet werden, die in mehreren Nachrichtenübertragungskanälen gleichzeitig gesendet werden und die untereinander identisch sind.

2. Verfahren nach Anspruch 1, dadurch gekennzeichnet, daß die Symbole der einzelnen Nachrichtenübertragungskanäle mit definierter Trägerphase zueinander gesendet werden.

3. Verfahren nach Anspruch 1, dadurch gekennzeichnet, daß Synchronisiersymbole $(s_1...s_n)$ verwendet werden, welche sich von allen Datensymbolen $(d_1...d_m)$ unterscheiden.

4. Verfahren nach Anspruch 1, dadurch gekennzeichnet, daß Daten- und Synchronisiersymbole $(d_1...d_m, s_1...s_n)$ der verschiedenen Nachrichtenübertragungskanäle nach einem Codemultiplex-Verfahren übertragen werden.

5. Verfahren nach Anspruch 1, dadurch gekennzeichnet, daß der Empfänger in den Empfangseinrichtungen aus den empfangenen Synchronisiersymbolen $(s_1..s_n)$ auf die momentanen Übertragungsfaktoren des Nachrichtenübertragungskanals schließt und der Empfänger seine Eigenschaften laufend an die gemessenen Kanaleigenschaften adaptiert.

6. Verfahren nach Anspruch 1, dadurch gekennzeichnet, daß die Synchronisiersymbole $(s_1...s_n)$ in regelmäßigen und dem Empfänger in den Empfangseinrichtungen bekannten Zeitabständen gesendet werden.

7. Verfahren nach Anspruch 1, dadurch gekennzeichnet, daß die Datensymbole $(d_1...d_m)$ blockweise gesendet werden, daß als Synchronisiersymbol $(s_1...s_n)$ jeweils eines von mindestens zwei verschiedenen Symbolen $(c_0, \overline{c_0})$ gesendet wird, daß die Synchronisiersymbole $(c_0, \overline{c_0})$ in einer definierten Reihenfolge an definierten Zeitplätzen des Datenblocks gesendet werden, daß Reihenfolge und Zeitplätze der Synchronisiersymbole $(c_0, \overline{c_0})$ dem Empfänger in dem Empfangseinrichtungen bekannt sind und daß der Empfänger aus den Empfangszeitpunkten und der Reihenfolge der empfangenen Synchronisiersymbole $(c_0, \overline{c_0})$ auf die zeitliche Lage des Blockanfangs der Datensymbole $(d_1...d_m)$ schließt.

8. Verfahren nach Anspruch 1, dadurch gekennzeichnet, daß die Datensymbole $(d_1...d_m)$ blockweise gesendet werden, daß die Synchronisiersymbole $(s_1...s_n)$ an definierten, dem Empfänger in den Empfangseinrichtungen bekannten Zeitplätzen des Datenblocks gesendet werden und daß der Empfänger aus der zeitlichen Lage der empfangenen Synchronisiersymbole $(s_1...s_n)$ auf die zeitliche Lage des Blockanfangs der Datensymbole $(d_1...d_m)$ schließt.

9. Schaltungsanordnung zur Durchführung des Verfahrens nach Anspruch 1, insbesondere bei einem digitalen Funkübertragungssystem, bei dem in der ortsfesten Funkstation (BS) unter Anwendung der Kombination von Zeitmultiplex-, Codemultiplex- un Frequenzmultiplexverfahren eine Vielzahl von Nachrichtenübertragungskanälen gebildet wird, dadurch gekennzeichnet, daß in der ortsfesten Funkstation (BS) eine Steuereinrichtung (15) und eine Synchronisierschaltung (4) angeordnet sind,

daß die mit der Synchronisierschaltung (4) verbundene Steuereinrichtung (15) das Einfügen von mittels der Synchronisierschaltung (4) erzeugter in allen Nachrichtenübertragungskanälen gleicher Synchronisiersymbole ($s_1...s_n$) zwischen die Datensymbole ($d_1...d_m$) derartig steuert, daß die Synchronisiersymbole ($s_1...s_n$) in den Nachrichtenübertragungskanälen gleichzeitig gesendet werden,

daß in der ortsfesten Funkstation (BS) ein mit der Steuereinrichtung (15) verbundener Codegenerator (5) angeordnet ist, welcher gesteuert durch die Steuereinrichtung (15) aus seinem Symbolvorrat Datensymbole ($d_1...d_m$) und Synchronisiersymbole ($s_1...s_n$) auswählt;

daß in den beweglichen Funkstationen (MS) eine Steuereinrichtung (26), mehrere Korrelatoren (23, 24, 25), eine Einrichtung (30), mehrere Abtastschaltungen (27, 28) und eine Entscheidungsstufe (29) angeordnet sind, daß die mit den Korrelatoren (23, 24, 25) verbundene Steuereinrichtung (26) die Einstellung auf die Synchronisiersymbole und Datensymbole ($s_1...s_n$;$d_1...d_m$) vornimmt,

daß die Einrichtung (30) mit der Steuereinrichtung (26), mit einem ersten Korrelator (23), mit den Abtastschaltungen (27,28) und mit der Entscheidungsstufe (29) verbunden ist und Mittel Zur Vermessung des augenblicklich gültigen Mehrwegprofils bzw. Zur Gewichtung der Abtastwerte proportional Zur Amplitude der dabei gemessenen Echos enthält, und daß die mit den Abtastschaltungen (27, 28) verbundene Entscheidungsstufe (29) sowohl die Symbol-Bit-Umwandlung durchführt als auch die Polarität schätzt.

## Claims

1. Method of synchronising the receiver arrangements in a digital multiplex transmission system, in which the spreading of the individual transmission channel bands is effected by using different sets of mutually unrelated data symbols and in that the data symbols of the individual message transmission channels of the multiplex transmission system are transmitted time-synchronously with each other, characterized in that between the data symbols ($d_1$, ...,$d_m$) synchronising symbols ($s_1$,...,$s_n$) are inserted with defined spacings, which are simultaneously transmitted over a plurality of message transmission channels and are identical to each other.

2. Method as defined in Claim 1, characterized in that the symbols of the individual message transmission channels are transmitted with a defined mutual carrier phase.

3. Method as defined in Claim 1, characterized in that synchronising symbols ($s_1$,...,$s_n$) are used which differ from all the data symbols ($d_1$, ..., dm).

4. Method as defined in Claim 1, characterized in that data and synchronising symbols ($d_1$, ..., $d_m$; $s_1$, ..., $s_n$) of the different message transmission channels are transmitted in accordance with a code-division multiplex method.

5. Method as defined in Claim 1, characterized in that the receiver in the receiver arrangements determines the instantaneous transmission factors of the message transmission channel on the basis of the received synchronising symbols ($s_1$, ..., $s_n$) and in that the receiver continuously adapts its properties to the measured channel properties.

6. Method as defined in Claim 1, characterized in that the synchronising symbols ($s_1$, ..., $s_n$) are transmitted at regular time intervals which are known to the receiver in the receiver arrangements.

7. Method as defined in Claim 1, characterized in that the data symbols ($d_1$, ..., $d_m$) are transmitted block-sequentially, in that always one of at least two different symbols ($c_0$, $c_0$) is transmitted as a synchronising symbol ($S_1$, ..., $s_n$), in that the synchronising symbols ($c_0$, $c_0$) are transmitted in a defined sequence at defined time positions of the data block, in that sequence and time positions of the synchronising symbols ($c_0$, $c_0$) are known to the receiver in the receiver arrangements and in that from the receiving instants and the sequence of the received synchronising symbols ($c_0$, $c_0$) the receiver determines the time position of the beginning of the block of data symbols ($d_1$, ..., $d_m$).

8. Method as defined in Claim 1, characterized in that the data symbols ($d_1$, ..., $d_m$) are transmitted block-sequentially, in that the synchronising symbols ($s_1$, ..., $s_n$) are transmitted at defined time positions of the data block which are known to the receiver in the receiver arrangements and in that the receiver determines the time position of he beginning of the block of

data symbols ($d_1$, ..., $d_m$) on the basis of the time position of the received synchronising symbols ($s_1$, ..., $s_n$).

9. Circuit arrangement for performing the method as defined in Claim 1, more specifically in a digital radio transmission system, in which system a plurality of message transmission channels is formed in the stationary radio station (BS) using a combination of time-division multiplex, code-division multiplex and frequency-division multiplex methods, characterized in that a control arrangement (15) and a synchronising circuit (4) are arranged in the stationary radio station (BS),

in that the control arrangement (15) connected to the synchronising circuit (4) controls the insertion of synchronising symbols ($s_1$, ..., $s_n$) produced by the synchronising circuit (4) and equal in all message transmission channels between the data symbols ($d_1$, ..., $d_m$) such that the synchronising symbols ($s_1$, ..., $s_n$) are simultaneously transmitted through the message transmission channels, in that a code generator (5) connected to the control arrangement (15) is included in the stationary radio station (BS) which code generator (5) selects data symbols ($d_1$, ..., $d_m$) and synchronising symbols ($s_1$, ..., $s_n$) from its stock of symbols under the influence of the control arrangement (15),

in that the mobile radio stations (MS) comprise a control arrangement (26), several correlators (23, 24, 25), an arrangement (30), several sampling circuits (27, 28) and a decision stage (29),

in that the control arrangement (26) connected to the correlators (23,24,25) effects the setting to the synchronising symbols and data symbols ($s_1$, ..., $s_n$; $d_1$, ..., $d_m$),

in that the arrangement (30) is connected to the control arrangement (26), to a first correlator (23), to the sampling circuits (27,28) and to the decision stage (29) and includes a means for measuring the instantaneous valid muitipath profile or for weighting the sample values in proportion to the amplitude of the echoes measured during the synchronisation,

and in that the decision stage (29) connected to the sampling circuits (27,28) effects both the symbol-to-bit conversion and also the estimation of the polarity.

**Revendications**

1. Procédé pour la synchronisation des dispositifs récepteurs dans un système de transmission multiplex numérique, dans lequel, pour l'étalement de bande et la séparation des canaux de transmission individuels, on utilise des jeux différents de symboles de données non corrélés entre eux et dans lequel on émet les symboles de données des canaux de transmission de messages individuels du système de transmission multiplex en synchronisme dans le temps, caractérisé en ce qu'on incorpore, entre les symboles de données ($d_1$, ..., $d_m$) à intervalles définis, des symboles de synchronisation ($s_1$, ..., $s_n$) qui sont émis simultanément dans plusieurs canaux de transmission de messages et qui sont mutuellement identiques.

2. Procédé suivant la revendication 1, caractérisé en ce que les symboles des canaux de transmission de messages individuels sont émis avec une phase de porteuse mutuellement définie.

3. Procédé suivant la revendication 1, caractérisé en ce qu'on utilise des symboles de synchronisation ($s_1$, ..., $s_n$) qui diffèrent de tous les symboles de données ($d_1$, ..., $d_m$).

4. Procédé suivant la revendication 1, caractérisé en ce que des symboles de données et de synchronisation ($d_1$, ..., $d_m$, $s_1$, ..., $s_n$) des divers canaux de transmission de messages sont transmis par un procédé à multiplexage codé.

5. Procédé suivant la revendication 1, caractérisé en ce que le récepteur, dans les dispositifs récepteurs, décide à partir des symboles de synchronisation reçus ($s_1$, ..., $s_n$) des facteurs de transmission du moment du canal de transmission de message et adapte de manière continue ses propriétés aux propriétés de canal mesurées.

6. Procédé suivant la revendication 1, caractérisé en ce que les symboles de synchronisation ($s_1$, ..., $s_n$) sont émis à des intervalles de temps réguliers et connus des récepteurs des dispositifs récepteurs.

7. Procédé suivant la revendication 1, caractérisé en ce que les symboles de données ($d_1$, ..., $d_m$) sont émis par blocs, que l'un d'au moins deux symboles différents ($c_0$, $\overline{c_0}$) est chaque fois émis à titre de symbole de synchronisation ($s_1$, ..., $s_n$), que les symboles de synchronisation ($c_0$, $\overline{c_0}$) sont émis dans un ordre de succession défini à des positions définies dans le temps du bloc de données, que l'ordre de succession et les positions dans le temps des symboles de synchronisation ($c_0$, $\overline{c_0}$) sont

connus des récepteurs des dispositifs récepteurs et que le récepteur décide, à partir des instants de réception et de l'ordre de succession des symboles de synchronisation ($c_0$, $\overline{c_0}$) reçus, de la position dans le temps du début du bloc des symboles de données ($d_1$, ..., $d_m$).

8. Procédé suivant la revendication 1, caractérisé en ce que les symboles de données ($d_1$, ..., $d_m$) sont émis par blocs, que les symboles de synchronisation ($s_1$, ..., $s_n$) sont émis à des positions dans le temps définies du bloc de données, qui sont connues des récepteurs des dispositifs récepteurs, et que le récepteur décide, à partir de la position dans le temps des symboles de synchronisation ($s_1$, ..., $s_n$) de la position dans le temps du début du bloc des symboles de données ($d_1$, ..., $d_m$).

9. Montage de circuit destiné à exécuter la procédé selon la revendication 1, en particulier dans un système de transmission radio numérique, dans lequel un grand nombre de canaux de transmission de messages est formé dans la station radio fixe (BS) par application d'une combinaison de procédés de multiplexage temporel, de multiplexage codé et de multiplexage fréquentiel, caractérisé en ce que la station radio fixe (BS) comporte un dispositif de commande (15) et un circuit de synchronisation (4), que le dispositif de commande (15) connecté au circuit de synchronisation (4) commande l'incorporation, entre les symboles de données ($d_1$, ..., $d_m$), de symboles de synchronisation ($s_1$, ..., $s_n$) identiques dans tous les canaux de transmission de messages et produits à l'aide du circuit de synchronisation (4), d'une manière telle que les symboles de synchronisation ($s_1$, ..., $s_n$) soient émis simultanément dans les canaux de transmission de messages, que la station radio fixe (BS) comporte un générateur de code (5) connecté au dispositif de commande (15), qui, sous la commande du dispositif de commande (15), sélectionne, à partir de sa réserve de symboles, des symboles de données ($d_1$, ..., $d_m$) et des symboles de synchronisation ($s_1$, ..., $s_n$). que les stations radio mobiles (MS) comportent un dispositif de commande (26), plusieurs corrélateurs (23, 24, 25), un dispositif (30), plusieurs circuits d'échantillonnage (27, 28) et un étage de décision (29), que le dispositif de commande (26) connecté aux corrélateurs (23, 24, 25) assure le réglage sur les symboles de synchronisation et les symboles de données ($s_1$, ..., $s_n$, $d_1$, ..., $d_m$), que le dispositif (30) est connecté au dispositif de commande (26), à un premier corrélateur (23), aux circuits d'échantillonnage (27, 28) et à l'étage de décision (29) et contient des moyens servant à mesurer le profil multivoie instantané en vigueur ou en vue de la pondération des valeurs d'échantillonnage en proportion de l'amplitude des échos ainsi mesurés, et que l'étage de décision (29) connecté aux circuits d'échantillonnage (27, 28) assure non seulement la conversion symbole-bit, mais également l'évaluation de la polarité.

FIG.1

$C_0 = \{C_0, \bar{C_0}\}$    $C_i = \{C_{i1}, \bar{C_{i1}}, C_{i2}, \bar{C_{i2}}\}$

FIG. 2

12

FIG.3

FIG. 4

FIG.5

FIG. 6

FIG. 7

14